# EUROPÄISCHE PATENTSCHRIFT

(11) **EP 0 709 978 B1**
(45) Veröffentlichungstag und Bekanntmachung des Hinweises auf die Patenterteilung: **27.08.2003**
(21) Anmeldenummer: 95117135.4
(22) Anmeldetag: 31.10.1995
(51) Int. Cl.: H04J 14/02, H04N 7/22, H04H 1/02, H04L 25/49

(54) **Optisches Nachrichtenübertragungssystem für Kabelfernsehsignale und für teilnehmerindividuelle Signale**
Optical transmission system for cable television signals and for subscriber signals
Système optique de transmission pour des signaux de télévision par câble et pour des signaux d'abonnés individuels

(30) Priorität: 31.10.1994 DE 4438942
(43) Veröffentlichungstag der Anmeldung: 01.05.1996
(73) Patentinhaber: ALCATEL, 75008 Paris (FR)
(72) Erfinder: Heidemann, Rolf, Dr., D-71732 Tamm (DE); Otterbach, Jürgen, D-70499 Stuttgart (DE); Veith, Gustav, Dr., D-75378 Bad Liebenzell-Möttl (DE)
(74) Vertreter: Kugler, Hermann, Dipl.-Phys.

(56) Entgegenhaltungen:
- EP-A- 0 386 466
- DE-A- 4 116 660
- US-A- 4 435 804

## Beschreibung

Die Erfindung betrifft ein optisches Nachrichtenübertragungssystem nach dem Oberbegriff des Patentanspruchs 1 und einem korrespondierenden Verfahren Patentanspruch 10.

Ein solches Nachrichtenübertragungssystem mit den dort angegebenen Merkmalen ist bekannt aus: L. Adnet et al, "Optoelektronik in der Teilnehmeranschlußleitung", Elektrisches Nachrichtenwesen (Alcatel), 4. Quartal 1992, Seiten 58-65. Das dort beschriebene System hat ein Schmalband- und ein Breitbandsystem und dient dazu, Kabelfernsehsignale auf eine Vielzahl von Teilnehmern zu verteilen und eine Übertragung von teilnehmerindividuellen Telekommunikationssignalen mit Hilfe des öffentlichen Fernsprechnetzes zwischen den Teilnehmern zu ermöglichen. Im Schmalbandsystem werden die teilnehmerindividuellen Telekommunikationssignale über ein passives optisches Netzwerk im Zeitmultiplexverfahren zwischen einem sendeseitigen Netzabschlußelement und einem empfangsseitigen optischen Netzabschluß übertragen, der sich im Gebäudeuntergeschoß befindet und an den eine Gruppe von Teilnehmern angeschlossen ist. Der optische Netzabschluß hat ein elektrooptisches Modul, das das empfangene optische Signal in ein elektrisches Signal wandelt. Das optische Signal wird in diesem Schmalbandsystem mit Licht einer Wellenlänge von 1300 nm übertragen.

Im Breitbandsystem werden die Kabelfernsehsignale von einer übergeordneten Verstärkerstelle ausgesendet, in der ein Videomultiplexsignal direkt in ein optisches Signal gewandelt und über ein passives optisches Netzwerk zu einem optischen Netzabschluß (BONT) übertragen wird, der das optische Signal in ein elektrisches Signal zurückwandelt, das den derzeitigen TV-Fernsehstandards entspricht. An den optischen Netzabschluß (BONT), der sich ebenfalls im Gebäudeuntergeschoß befindet, ist eine Gruppe von Teilnehmern angeschlossen. Anders als im Schmalbandsystem werden die Kabelfernsehsignale hier mit Licht einer Wellenlänge von 1550 nm übertragen. Dadurch ist es möglich, die optischen Signale des Schmalbandsystems und die des Breitbandsystems über ein gemeinsames passives optisches Netzwerk unter Verwendung des Wellenlängenmultiplexverfahrens zu übertragen.

Das aus diesen beiden Teilsystemen zusammengesetzte System benötigt somit in jedem Gebäude zwei optische Netzabschlüsse, die die jeweiligen optischen Signale wieder in elektrische Signale wandeln.

Aus EP-A-0 386 482 ist ein optisches Nachrichtenübertragungssystem für den Teilnehmeranschlußbereich bekannt, bei dem in der Zentrale aus Fernsehsignalen und teilnehmerindividuellen Signalen ein elektrisches Frequenzmultiplexsignal gebildet wird, das von einem elektrooptischen Wandler in ein optisches Signal gewandelt wird. Dieses optische Signal wird über Lichtwellenleiter zu den Teilnehmern übertragen. Jeder Teilnehmer hat einen optoelektrischen Wandler, der das optische Signal in das elektrische Frequenzmultiplexsignal wandelt. In einer sich daran anschließenden Frequenzweiche werden die Fernsehsignale und die teilnehmerindividuellen Signale getrennt.

DE-A-41 16 660 offenbart ein optisches System mit einer Zentrale, einem aktiven optischen Netzwerk und einer Vielzahl von Teilnehmern. Kabelfernsehsignale in einem Frequenzbereich von 80 bis 450 MHz werden in der Zentrale elektrooptisch gewandelt und über das aktive optische Netzwerk zu den Teilnehmern übertragen. Zusätzlich werden teilnehmerindividuelle Signale in der Zentrale moduliert und zu einem Frequenzmultiplexsignal im Frequenzbereich 470 bis 500 MHz zusammengestellt. Jedem Teilnehmer wird ein Kanal mit einer individuellen Trägerfrequenz zugewiesen. Jeder Kanal ist ca. 30 kHz breit, so dass 1024 Teilnehmer versorgt werden können. Die frequenzgemultiplexten teilnehmerindividuellen Signale werden elektrooptisch gewandelt und anschließend zusammen mit den optischen Kabelfernsehsignalen bei derselben Wellenlänge übertragen.

US-A-4 435 804 offenbart ein in-house Koax-Netzwerk für Computer (Schmalbanddaten) und Telefonie (Sprache). US-A-4 435 804 bezieht sich damit auf ein gegenüber optischen Systemen zum Übertragen von Kabelfernsehsignalen und teilnehmerindividuellen Signalen völlig anderes technisches Gebiet, was auch durch die Einordnung in eine andere Patentklasse zum Ausdruck kommt. Das Koax-Netzwerk arbeitet mit timesharing, bei dem Kollisionen auftreten können. Es ist ein rein elektrisches Netz, das keinerlei optische Komponenten aufweist. Die Grenzfrequenz liegt im Bereich von 0,3 bis 4 kHz. Zur Frequenzbereichverschiebung eines ersten elektrischen Signals wird eine Manchesterkodierung verwendet. Anschließend wird eine Kopplung eines zweiten elektrischen Signals, dessen Frequenzbereich in den freigewordenen Teil des Frequenzbereichs des ersten elektrischen Signals fällt, durchgeführt.

Der Erfindung liegt die Aufgabe zugrunde, ein optisches Nachrichtenübertragungssystem anzugeben, bei dem in jedem Gebäude nur ein optischer Netzabschluß notwendig ist, wodurch im Teilnehmeranschlußbereich die Kosten reduziert werden. Ein diese Aufgabe lösendes System ist Gegenstand des Patentanspruchs 1. Vorteilhafte Ausgestaltungen der Erfindung sind in den Unteransprüchen angegeben.

Ein Vorteil der Erfindung ist, daß bestehende Kabelfernsehverteilsysteme sukzessiv je nach Bedarf nachgerüstet werden können. Bei dem aus EP-A-0 386 482 bekannten System ist dies nur mit hohem Aufwand möglich. Haben Bewohner eines Gebäudes den Wunsch, teilnehmerindividuelle Telekommunikationsdienste in Anspruch zu nehmen, genügt es, dieses Gebäude mit den entsprechenden Einrichtungen auszurüsten. Das übrige Kabelfernsehsystem und die anderen Gebäude bleiben von dieser Maßnahme unbeeinflußt.

Die Erfindung wird im folgenden anhand von Zeichnungen näher erläutert. Es zeigen:
- Fig. 1: schematisch ein optisches Nachrichtenübertragungssystem,
- Fig. 2: das optische Nachrichtenübertragungssystem mit für die Erfindung relevanten Bestandteilen, und
- Fig.3: beispielhafte Spektralfunktionen von elektrischen Signalen.

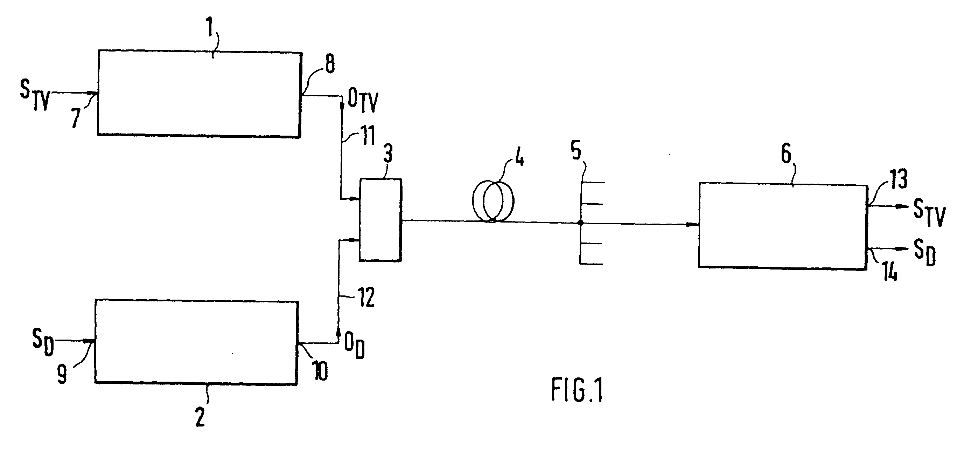

In Fig. 1 ist schematisch ein optisches Nachrichtenübertragungssystem gezeigt. In der Figur sind zwei Sendeeinrichtungen 1, 2 gezeigt, die sich z.B. in einer Zentrale befinden können. Sie können sich aber auch an unterschiedlichen Orten befinden. In der ersten Sendeeinrichtung 1 wird ein erstes elektrisches Signal S_{TV} in ein erstes optisches Signal O_{TV} gewandelt. Ein solches elektrisches Signal S_{TV} ist hier vorzugsweise ein analoges Kabelfernsehsignal. In der zweiten Sendeeinrichtung 2 wird ein zweites elektrisches Signal S_{D} in ein zweites optisches Signal O_{D} gewandelt. Ein solches zweites elektrisches Signal S_{D} ist hier ein digitales Zeitmultiplexsignal, das aus teilnehmerindividuellen Telekommunikationssignalen besteht. Jedem Teilnehmer ist mindestens ein Zeitschlitz zugeordnet. Die von diesen Sendeeinrichtungen 1, 2 ausgesendeten optischen Signale O_{TV}, O_{D} werden im Wellenlängenmultiplexverfahren über ein optisches Verteilnetz 4, 5 z. B. von der Zentrale zu einer Vielzahl von Teilnehmern übertragen. An das optische Verteilnetz 4, 5 sind mehrere optische Netzabschlüsse 6 angeschlossen, in dem die optischen Signale O_{TV}, O_{D} wieder in elektrische Signale S_{TV}, S_{S} gewandelt werden. An jeden optischen Netzabschluß 6 ist eine Gruppe von Teilnehmern angeschlossen, die Kabelfernsehsignale empfangen und teilnehmerindividuelle Telekommunikationsdienste in Anspruch nehmen kann. Zur Vereinfachung der Figur ist nur ein optischer Netzabschluß 6 eingezeichnet, der zwei Ausgänge 13, 14 hat. Am ersten Ausgang 13 tritt das Kabelfernsehsignal S_{TV} aus, das über Koaxkabel zu einzelnen Fernsehgeräten der Teilnehmer geführt wird. Am zweiten Ausgang 14 tritt das zweite elektrische Signal S_{D}, das ebenfalls über Koaxkabel zu den Teilnehmerendgeräten geführt wird. Jedes Teilnehmerendgerät hat einen Demultiplexer, durch den nur das für diesen Teilnehmer bestimmte Telekommunikationssignal aus dem Zeitmultiplexsignal entnommen wird. Das der ersten Sendeeinrichtung 1 über einen Eingang 7 zugeführte Kabelfernsehsignal S_{TV} wird in der ersten Sendeeinrichtung 1 in ein optisches Signal O_{TV} gewandelt, das an deren Ausgang 8 austritt. Dieses optische Signal O_{TV} hat beispielsweise eine Wellenlänge von 1550 nm und wird über einen ersten Lichtwellenleiter 11 einer Wellenlängenmultiplexeinrichtung 3 zugeführt. Der zweiten Sendeeinrichtung 2 wird das zweite elektrische Signal S_{D} über einen Eingang 9 zugeführt. Auch in dieser Sendeeinrichtung 2 wird das zweite elektrische Signal S_{D} in ein optisches Signal O_{D} gewandelt, das an einem Ausgang 10 aus der zweiten Sendeeinrichtung 2 austritt, und über einen zweiten Lichtwellenleiter 12 der Wellenlängenmultiplexeinrichtung 3 zugeführt wird. Das von der zweiten optischen Sendeeinrichtung 2 ausgesendete optische Signal O_{D} hat beispielsweise eine Wellenlänge von 1532 nm.

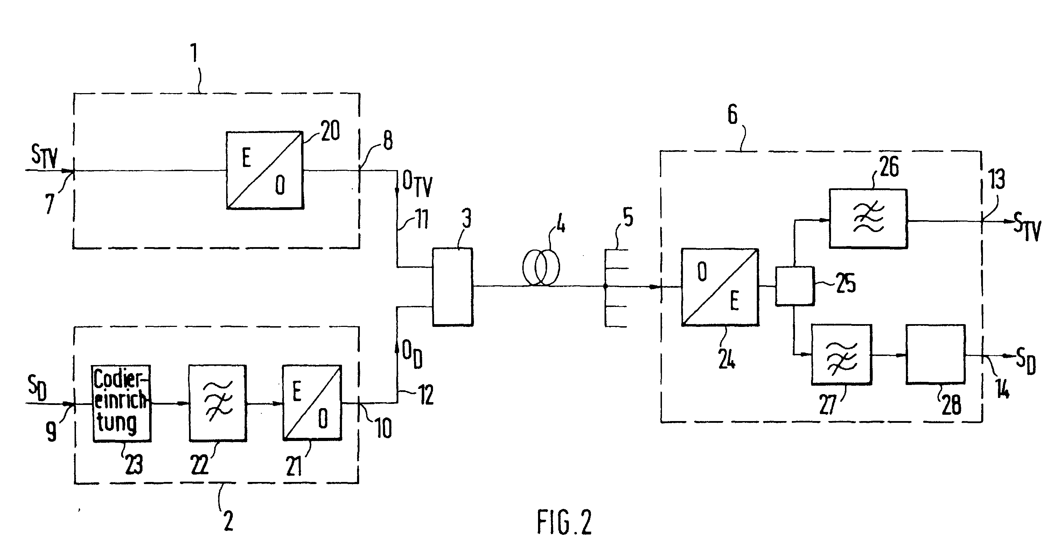

In Fig. 2 ist das optische Nachrichtenübertragungssystem mit für die Erfindung relevanten Bestandteilen gezeigt. Die bereits in Fig.1 genannten Sendeeinrichtungen 1, 2 und der optische Netzabschluß 6 sind hier detaillierter dargestellt. Bereits in Fig. 1 genannte Bestandteile haben in Fig. 2 dieselben Bezugszeichen. Die erste Sendeeinrichtung 1 für das Kabelfernsehsignal S_{TV} hat als wesentlichen Bestandteil einen elektrooptischen Wandler 20, z.B. einen DFB-Halbleiterlaser, der Licht der genannten Wellenlänge von 1550 nm aussendet. In dieser Sendeeinrichtung 1, wie auch in der zweiten Sendeeinrichtung 2 sind eventuell vorhandene Steuer- und Regeleinrichtungen nicht eingezeichnet.

Die zweite Sendeeinrichtung 2 für das zweite elektrische Signal S_{D} (Digitalsignal) hat als wesentliche Bestandteile Mittel 22, 23 zum Verarbeiten des zweiten elektrischen Signals S_{D} und einen elektrooptischen Wandler 21, der ebenfalls ein DFB-Halbleiterlaser ist, der Licht der genannten Wellenlänge von 1532 nm aussendet. Die Mittel 22, 23 zum Verarbeiten bestehen aus einer Codiereinrichtung 23 und einer Filtereinrichtung 22, die ein Hochpaßfilter ist. Das zweite elektrische Signal S_{D} wird der Codiereinrichtung 23 zugeführt, die dieses Signal entsprechend einer vorgegebenen Codiervorschrift codiert. Eine solche Codiervorschrift ist eine Kanalcodierung: Z.B. der sogenannte Miller-Code, der bekannt ist aus: G. Morgenstern, "Vergleich der Leistungsdichtespektren verschiedener binärer Basisbandsignale ", Technischer Bericht, Deutsche Bundespost, 44TBr71, Juli 1978.

Das codierte zweite elektrische Signal S_{D} wird dem Hochpaßfilter 22 zugeführt, das Frequenzen des zweiten elektrischen Signals S_{D} unterdrückt, die unterhalb einer festgelegten Grenzfrequenz f_{G1}, z.B. f_{G1} = 500 MHz, des Hochpaßfilters 22 liegen. Dieses codierte und hochpaßgefilterte zweite elektrische Signal S_{D} wird dem zweiten elektrooptischen Wandler 21 zugeführt, der dieses Signal in das optisches Signal O_{D} wandelt.

Um die über das optische Verteilnetz 4, 5 gesendeten optischen Signale O_{TV}, O_{D} empfangen und auswerten zu können, hat der optische Netzabschluß 6 folgende Bestandteile: Ein optoelektrischer Wandler 24 wandelt die empfangenen optischen Signale O_{TV}, O_{D} in ein elektrisches Multiplexsignal E_{MUX}. Dieses elektrische Multiplexsignal E_{MUX} wird Trenn- und Verarbeitungsmitteln 25, 26, 27, 28 zugeführt.

Die Trenn- und Verarbeitungsmittel 25, 26, 27 28 bestehen z. B. aus einem Leistungsteiler 25, der das elektrische Multiplexsignal E_{MUX} in zwei Zweige aufteilt, einem im ersten Zweig vorhandenen ersten elektrischen Filter 26, das Frequenzen des elektrischen Multiplexsignals E_{MUX} unterdrückt, die größer als eine zweite Grenzfrequenz f_{G2} sind, einem im zweiten Zweig vorhandenen zweiten elektrischen Filter 27, das Frequenzen des elektrischen Multiplexsignals E_{MUX} unterdrückt, die kleiner als eine dritte Grenzfrequenz f_{G3} sind, und einer ebenfalls im zweiten Zweig vorhandenen Regenerator- und Decodiereinrichtung 28, die das durch das zweite elektrische Filter 27 gefilterte elektrische Signal regeneriert und das zweite elektrische Signal S_{D} decodiert. Anstelle des Leistungsteilers 25 und den elektrischen Filtern 26, 27 ist auch eine entsprechend ausgelegte elektrische Frequenzweiche möglich.

Das erste elektrische Filter 26 ist ein Tiefpaßfilter, dessen Grenzfrequenz f_{G2} z.B. 350 MHz beträgt. Das zweite elektrische Filter 27 ist ein Hochpaßfilter, dessen Grenzfrequenz f_{G3} z.B. 400 MHz beträgt. Die Filter haben eine Flankensteilheit die ausreichend ist, um die elektrischen Signale S_{TV}, S_{D} vom elektrischen Multiplexsignal E_{MUX} abzutrennen.

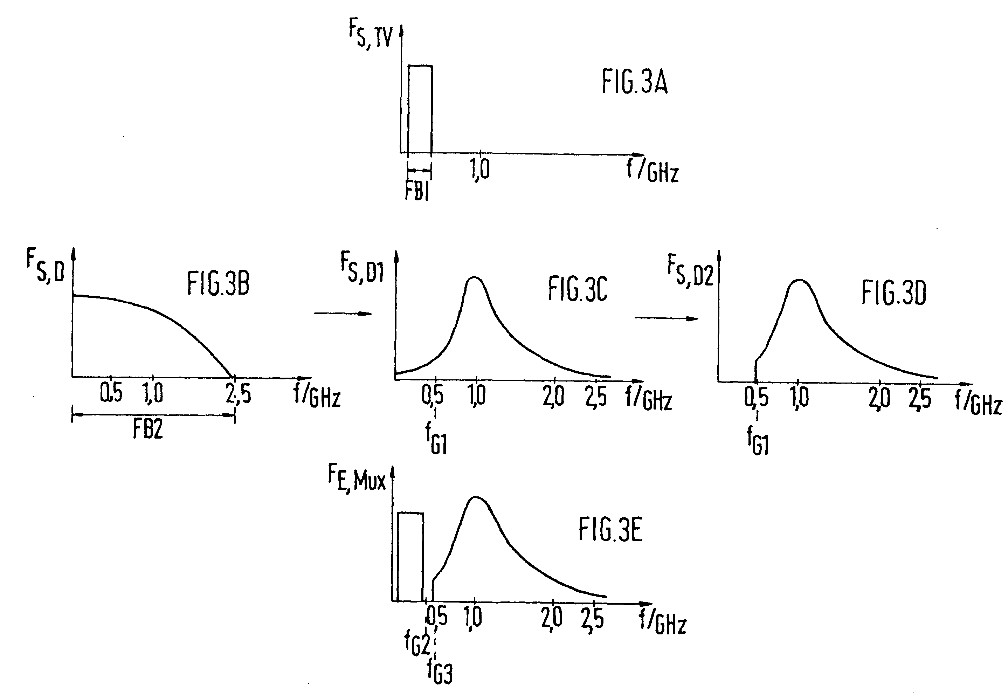

Das dem in den Figuren 1 und 2 gezeigten optischen System zugrundeliegende Prinzip wird anhand von Fig. 3 erläutert. Fig. 3 zeigt Spektralfunktionen (Spektren) F, also die Energieverteilung eines Signals als Funktion der Frequenz, von im optischen System vorkommenden elektrischen Modulationssignalen:
- Fig. 3a zeigt die Spektralfunktion F_{S,TV} des ersten elektrischen Signals S_{TV}, das einen ersten Frequenzbereich FB1 von 47 bis 300 MHz einnimmt und hier einen rechteckförmigen Verlauf hat.
- Fig. 3b zeigt die Spektralfunktion F_{S,D} des zweiten elektrischen Signals S_{D}, das z.B. ein Digitalsignal mit einer Bitfolgefrequenz von 2,5 Gbit/s ist. Dieses Signal S_{D} nimmt einen zweiten Frequenzbereich FB2 von 0 bis 2,5 GHz ein.
- Fig. 3c zeigt die Spektralfunktion F_{S,D1} des codierten zweiten elektrischen Signals, das zur Unterscheidung hier mit S_{D1} bezeichnet ist. Dieses Signal S_{D1} nimmt ebenfalls den zweiten Frequenzbereich FB2 ein, zeigt aber einen näherungsweisen Gauß-förmigen Verlauf mit einem ausgeprägten Maximum bei f = 1,0 GHz. Die Energie des zweiten elektrischen Signals S_{D} ist hier somit auf einen Teilbereich mit einem Schwerpunkt um f = 1,0 GHz konzentriert.
- Fig. 3d zeigt die Spektralfunktion F_{S,D2} des codierten und hochpaßgefilterten zweiten elektrischen Signals, das mit S_{D2} bezeichnet ist. Dieses Signal S_{D2} hat nach der Filterung nur Frequenzen von f_{G} = 0,500 GHz bis 2,5 GHz.
- Fig. 3e zeigt die Spektralfunktion F_{E,MUX} des elektrischen Multiplexsignals E_{MUX}, die sich aus der Überlagerung der Spektralfunktionen F_{S,TV} und F_{S,D2} ergibt. Der erste Frequenzbereich FB1 des ersten elektrischen Signals S_{TV} ist deutlich von dem Frequenzbereich des codierten und gefilterten zweiten elektrischen Signals S_{D2} getrennt. Dadurch kommt es zu keiner störenden gegenseitigen Beeinflussung der beiden Signale S_{TV}, S_{D}.

Das zweite elektrische Signal S_{D} wird durch die Codiereinrichtung 23 derart verarbeitet (codiert), daß seine Energie auf einen Teilbereich des zweiten Frequenzbereiches FB2 konzentriert wird. Dies entspricht einer Verschiebung des Schwerpunkts der Spektralfunktion F_{S,D}. Vorzugsweise erfolgt die Codierung so, daß der Schwerpunkt der Spektralfunktion F_{S,D} zu höheren Frequenzen hin verschoben wird, so daß bei niedrigen Frequenzen im Vergleich zur Gesamtenergie des zweiten elektrischen Signals S_{D} nur noch geringe Energie vorhanden ist (Fig. 3c). Anschließend werden diese niedrigen Frequenzen durch das Hochpaßfilter 22 unterdrückt, so daß im Frequenzbereich von 0 bis zur Grenzfrequenz f_{G1} des Hochpaßfilters 22 die Spektralfunktion F_{S,D2} sehr viel kleiner (z. B. 60 dB) als die Spektralfunktion F_{S, TV} ist; die Spektralfunktion F_{S,D2} kann aber auch nahezu Null sein (Fig. 3d). In der Spektralfunktion F_{S,D2} gibt es somit einen "Freiraum". Da die Energie des zweiten elektrischen Signals S_{D} vor der Filterung konzentriert wurde, geht durch die Filterung nur ein geringer Teil der Energie verloren, und das zweite elektrische Signal S_{D} kann im optischen Netzabschluß 6 mit ausreichender Qualität zurückgewonnen werden.

Im optoelektrischen Wandler 24 entsteht aus den empfangenen optischen Sigalen O_{TV} und O_{D} das elektrische Multiplexsignal E_{MUX} (Fig. 3e). In diesem erst im optischen Netzabschluß 6 entstehenden Multiplexsignal E_{MUX} ist der in der Spektralfunktion F_{S,D2} vorhandene Freiraum durch die Spektralfunktion F_{S,TV} des ersten elektrischen Signals S_{TV} belegt.

Die in der Beschreibung angegebenen Zahlenwerte sind als Beispiele zu verstehen. Für die Anwendung des beschriebenen Prinzips kommen selbstverständlich auch andere Zahlenwerte und Frequenzbereiche in Frage. Für das erste elektrische Signal S_{TV} gilt, daß es nicht notwendigerweise ein analoges Kabelfernsehsignal sein muß. Es kann z.B. auch ein weiteres Digitalsignal sein.

Das erste elektrische Signal ist z.B. ein analoges Signal, ein analoges Kabelfernsehsignal oder ein Digitalsignal.

Die erste Grenzfrequenz f_{G1} ist ca. 500 MHz, die zweite Grenzfrequenz f_{G2} ist ca. 350 MHz, die dritte Grenzfrequenz f_{G3} ist ca. 400 MHz.

## Patentansprüche

1. Optisches Nachrichtenübertragungssystem mit einer ersten Sendeeinrichtung (1), die ein erstes elektrisches Signal (S_{TV}), dessen Spektrum in einem ersten Frequenzbereich (FB1) liegt, in ein erstes optisches Signal (O_{TV}) mit der Wellenlänge λ₁ wandelt, mit einer zweiten Sendeeinrichtung (2), die ein zweites elektrisches Signal (S_{D}), dessen Spektrum in einem zweiten Frequenzbereich (FB2) liegt, in ein zweites optisches Signal (O_{D}) wandelt, und mit einer Koppeleinrichtung (3), die die optischen Signale (O_{TV}, O_{D}) in ein Lichtwellenleiternetz (4, 5) einkoppelt, an das mindestens ein optischer Netzabschluß (6) angeschlossen ist,
**dadurch gekennzeichnet,**
**dass** in der zweiten Sendeeinrichtung (2) Mittel (22, 23) zum Verarbeiten des zweiten elektrischen Signals (S_{D}) vorhanden sind, die dessen Energie auf einen vom ersten Frequenzbereich (FB1) unterschiedlichen Teilbereich des zweiten Frequenzbereichs (FB2) konzentrieren, und dass in der zweiten Sendeeinrichtung (2) ein elektrooptischer Wandler (21) vorhanden ist, zur Wandlung des konzentrierten, zweiten elektrischen Signals in das zweite optische Signal (O_{D}) mit der Wellenlänge λ₂, die ungleich der Wellenlänge λ₁ ist, und dass in mindestens einem optischen Netzabschluß (6) ein optoelektrischer Wandler (24), der die empfangenen optischen Signale (O_{TV}, O_{D}) der Wellenlängen λ₁ und λ₂ in ein elektrisches Multiplexsignal (E_{MUX}) wandelt, und Trenn- und Verarbeitungsmittel (25, 26, 27, 28) vorhanden sind, die das erste und zweite elektrische Signal (S_{TV}, S_{D}) aus dem elektrischen Multiplexsignal (E_{MUX}) zurückgewinnen.

2. Optisches System nach Anspruch 1, **dadurch gekennzeichnet, daß** die Mittel (22, 23) zum Verarbeiten des zweiten elektrischen Signals (S_{D}) das Spektrum so konzentrieren, daß Frequenzen, die kleiner als eine den Teilbereich des zweiten Frequenzbereichs (FB2) begrenzende erste Grenzfrequenz (f_{G1}) sind, unterdrückt sind.

3. Optisches System nach Anspruch 2, **dadurch gekennzeichnet, daß** die Mittel (22, 23) zum Verarbeiten des zweiten Signals (S_{D}) aus einer Codiereinrichtung (23), die das zweite elektrische Signal (S_{D}) entsprechend einer Codiervorschrift codiert, und einer Filtereinrichtung (22) bestehen, die Frequenzen unterdrückt, die kleiner als die erste Grenzfrequenz (f_{G1}) sind, und daß die Trenn- und Verarbeitungsmittel (25, 26, 27, 28) aus einer als Leistungsteiler ausgeführten Aufteileinrichtung (25), die das elektrische Multiplexsignal (E_{MUX}) in zwei Zweige aufteilt, einem im ersten Zweig vorhandenen ersten elektrischen Filter (26), das Frequenzen des elektrischen Multiplexsignals (E_{MUX}) unterdrückt, die größer als eine zweite Grenzfrequenz (f_{G2}) sind, einer im zweiten Zweig vorhandenen zweiten elektrischen Filter (27), das Frequenzen des elektrischen Multiplexsignals (E_{MUX}) unterdrückt, die kleiner als eine dritte Grenzfrequenz (f_{G3}) sind, und einer Regenerator- und Decodiereinrichtung (28) bestehen, die das durch Filterung des elektrischen Multiplexsignals (E_{MUX}) erhaltene Signal regeneriert und decodiert und daraus das zweite elektrische Signal (S_{D}) zurückgewinnt.

4. Optisches System nach Anspruch 3, **dadurch gekennzeichnet, daß** das elektrische Filter (22) der zweiten Sendeeinrichtung (2) ein Hochpaßfilter ist, daß das erste elektrische Filter (26) des optischen Netzabschlusses (6) ein Tiefpaßfilter ist, und daß das zweite elektrische Filter (27) des optischen Netzabschlusses (6) ein Hochpaßfilter ist.

5. Optisches System nach Anspruch 2, **dadurch gekennzeichnet, daß** die Mittel (22, 23) zum Verarbeiten des zweiten Signals (S_{D}) aus einer Codiereinrichtung (23), die das zweite elektrische Signal (S_{D}) entsprechend einer Codiervorschrift codiert und einer Filtereinrichtung (22) bestehen, die Frequenzen unterdrückt, die kleiner als die erste Grenzfrequenz (f_{G1}) sind, und daß die Trenn- und Verarbeitungsmittel (25, 26, 27, 28) aus einer elektrischen Frequenzweiche, die das elektrische Multiplexsignal (E_{Mux}) in zwei Zweige aufteilt, wobei im ersten Zweig Frequenzen des elektrischen Multiplexsignals (E_{Mux}) unterdrückt sind, die größer als eine zweite Grenzfrequenz (f_{G2}) sind, und einer im zweiten Zweig vorhandenen Regenerator- und Decodiereinrichtung (28) bestehen, wobei im zweiten Zweig Frequenzen unterdrückt sind, die kleiner als eine dritte Grenzfrequenz (f_{G3}) sind.

6. Optisches System nach Anspruch 1, 3 oder 5, **dadurch gekennzeichnet, dass** die erste Sendeeinrichtung (1) geeignet ist, des erste elektrische Signal (S_{TV}), das ein analoges Signal, ein analoges Kabelfernsehsignal oder ein Digitalsignal ist, in das erste optische Signal zu wandeln, und dass die zweite Sendeeinrichtung (2) geeignet ist, das zweite elektrische Signal (S_{D}), das ein Digitalsignal oder ein digitales Zeitmultiplexsignal aus teilnehmerindividuellen Telekommunikationssignalen ist, in das zweite optische Signal zu wandeln.

7. Optisches System nach Anspruch 1, **dadurch gekennzeichnet, daß** die Koppeleinrichtung (3) als Wellenlängenmultiplexeinrichtung ausgeführt ist, die geeignet ist, das erste optische Signal mit einer Wellenlänge von 1550 nm und das zweite optische Signal mit einer Wellenlänge von 1532 nm zu koppeln.

8. Optisches System nach Anspruch 3 oder 5, **dadurch gekennzeichnet, dass** das Lichtwellenleiternetz (4, 5) ein passives optisches Netzwerk ist, und dass die erste Grenzfrequenz (f_{G1}) ca. 500 MHz, die zweite Grenzfrequenz (f_{G2}) ca. 350 MHz und die dritte Grenzfrequenz (f_{G3}) ca. 400 MHz beträgt.

9. Optisches System nach Anspruch 3 oder 5, **dadurch gekennzeichnet, daß** die Codiervorschrift eine Kanalcodierung mit dem Miller-Code ist.

10. Verfahren zum optischen Übertragen eines zweiten elektrischen Signals (S_{D}) über ein Lichtwellenleiternetz (4, 5), über das ein erstes elektrisches Signal (S_{TV}), dessen Spektrum in einem ersten Frequenzbereich (FB1) liegt, nach einer elektrooptischen Wandlung als erstes optisches Signal (O_{TV}) mit der Wellenlänge λ₁ übertragen wird, **dadurch gekennzeichnet, dass** das zweite elektrisches Signal (S_{D}), dessen Spektrum in einem zweiten Frequenzbereich (FB2) liegt, derart verarbeitet wird, dass dessen Energie auf einen vom ersten Frequenzbereich (FB1) unterschiedlichen Teilbereich des zweiten Frequenzbereichs (FB2) konzentriert wird, dass anschließend das konzentrierte zweite elektrische Signal elektrooptisch zu einem zweiten optischen Signal (O_{D}) mit der Wellenlänge λ₂, die ungleich der Wellenlänge λ₁ ist, gewandelt wird, und dass das zweite optische Signal (O_{D}) zusammen mit dem ersten optischen Signal (O_{TV}) im Wellenlängenmultiplex über das Lichtwellenleiternetz (4, 5) übertragen wird, wobei die Wellenlängen λ₁ und λ₂ derart gewählt sind, dass das wellenlängengemultiplexte Signal mittels eines optoelektrischen Wandlers (24) in ein elektrisches Multiplexsignal wandelbar ist.

11. Verfahren nach Anspruch 10, **dadurch gekennzeichnet, dass** das elektrische Signal ein digitales Zeitmultiplexsignal aus teilnehmerindividuellen Signalen ist, das zur Konzentration der Energie zunächst kanalkodiert und anschließend mittels eines Hochpaßfitters gefiltert wird.

## Claims

1. Optical telecommunications system, comprising a first transmitting device (1) that converts a first electrical signal (S_{TV}) whose spectrum lies in a first frequency range (FB1) into a first optical signal (O_{TV}) having the wavelength λ₁, comprising a second transmitting device (2) that converts a second electrical signal (S_{D}) whose spectrum lies in a second frequency range (FB2) into a second optical signal (O_{D}), and comprising a coupling device (3) that couples the optical signals (O_{TV}, O_{D}) into an optical waveguide network (4, 5) to which at least one optical network termination (6) is connected, **characterized in that** there are present in the second transmitting device (2) means (22, 23) for processing the second electrical signal (S_{D}) that concentrate its energy on a subrange, different from the first frequency range (FB1), of the second frequency range (FB2) and **in that** there is present in the second transmitting device (2) an electrooptical converter (21) for converting the concentrated, second electrical signal into the second optical signal (O_{D}) having the wavelength λ₂, which is not equal to the wavelength λ₁, and **in that** there are present in at least one optical network termination (6) an optoelectrical converter (24) that converts the received optical signals (O_{TV}, O_{D}) of the wavelengths λ₁ and λ₂ into an electrical multiplex signal (E_{MUX}), and separating and processing means (25, 26, 27, 28) that recover the first and second electrical signal (S_{TV}, S_{D}) from the electrical multiplex signal (E_{MUX}).

2. Optical system according to Claim 1, **characterized in that** the means (22, 23) for processing the second electrical signal (S_{D}) concentrate the spectrum in such a way that the frequencies that are less than a first cutoff frequency (f_{G1}) bounding the subrange of the second frequency range (FB2) are suppressed.

3. Optical system according to Claim 2, **characterized in that** the means (22, 23) for processing the second signal (S_{D}) comprise an encoding device (23) that encodes the second electrical signal (S_{D}) in accordance with an encoding scheme and a filter device (22) that suppresses frequencies that are less than the first cutoff frequency (f_{G1}), and **in that** the separating and processing means (25, 26, 27, 28) comprise a splitting device (25) that is implemented as a power divider and that splits the electrical multiplex signal (E_{MUX}) into two branches, a first electrical filter (26) that is present in the first branch and that suppresses frequencies of the electrical multiplex signal (E_{MUX}) that are greater than a second cutoff frequency (f_{G2}), a second electrical filter (27) that is present in the second branch and that suppresses frequencies of the electrical multiplex signal (E_{MUX}) that are less than a third cutoff frequency (f_{G3}), and a regenerator and decoding device (28) that regenerates and decodes the signal obtained by filtering the electrical multiplex signal (E_{MUX}) and recovers the second electrical signal (S_{D}) therefrom.

4. Optical system according to Claim 3, **characterized in that** the electrical filter (22) of the second transmitting device (2) is a high-pass filter, **in that** the first electrical filter (26) of the optical network termination (6) is a low-pass filter, and **in that** the second electrical filter (27) of the optical network termination (6) is a high-pass filter.

5. Optical system according to Claim 2, **characterized in that** the means (22, 23) for processing the second signal (S_{D}) comprise an encoding device (23) that encodes the second electrical signal (S_{D}) according to an encoding scheme and a filter device (22) that suppresses frequencies that are less than the first cutoff frequency (f_{G1}), and **in that** the separating and processing means (25, 26, 27, 28) comprise an electrical frequency divider that splits the electrical multiplex signal (E_{MUX}) into two branches, wherein frequencies of the electrical multiplex signal (E_{MUX}) that are greater than a second cutoff frequency (f_{G2}) are suppressed in the first branch, and a regenerator and decoding unit (28) present in the second branch, wherein frequencies that are less than a third cutoff frequency (f_{G3}) are suppressed in the second branch.

6. Optical system according to Claim 1, 3 or 5, **characterized in that** the first transmitting device (1) is suitable for converting the first electrical signal (S_{TV}), which is an analog signal, an analog cable television signal or a digital signal, into the first optical signal, and **in that** the second transmitting device (2) is suitable for converting the second electrical signal (S_{D}), which is a digital signal or a digital time-division multiplex signal comprising individual subscriber telecommunications signals, into the second optical signal.

7. Optical system according to Claim 1, **characterized in that** the coupling device (3) is implemented as a wavelength-division multiplex device that is capable of coupling the first optical signal having a wavelength of 1550 nm and the second optical signal having a wavelength of 1532 nm.

8. Optical system according to Claim 3 or 5, **characterized in that** the optical waveguide network (4, 5) is a passive optical network, and **in that** the first cutoff frequency (f_{G1}) is approximately 500 MHz, the second cutoff frequency (f_{G2}) is approximately 350 MHz and the third cutoff frequency (f_{G3}) is approximately 400 MHz.

9. Optical system according to Claim 3 or 5, **characterized in that** the encoding scheme is a channel encoding using the Miller code.

10. Method for the optical transmission of a second electrical signal (S_{D}) via an optical waveguide network (4, 5) over which a first electrical signal (S_{TV}) whose spectrum is in a first frequency range (FB1) is transmitted, after an electrooptical conversion, as first optical signal (O_{TV}) having the wavelength λ₁, **characterized in that** the second electrical signal (S_{D}), whose spectrum lies in a second frequency range (FB2), is processed in such a way that its energy is concentrated on a subrange, different from the first frequency range (FB1), of the second frequency range (FB2), **in that** the concentrated second electrical signal is then converted electrooptically to form a second optical signal (O_{D}) having the wavelength λ₂, which is not equal to the wavelength λ₁, and **in that** the second optical signal (O_{D}) is transmitted together with the first optical signal (O_{TV}) in wavelength-division multiplex via the optical waveguide network (4, 5), wherein the wavelength λ₁ and λ₂ are chosen in such a way that the wavelength-division multiplexed signal can be converted into an electrical multiplex signal by means of an optoelectric converter (24).

11. Method according to Claim 10, **characterized in that** the electrical signal is a digital time-division multiplex signal that comprises individual subscriber signals and that, to concentrate the energy, is first channel-coded and then filtered by means of a high-pass filter.

## Revendications

1. Système optique de communication avec un premier dispositif d'émission (1), qui convertit un premier signal (S_{TV}) électrique, dont le spectre se situe dans une première plage de fréquences (FB1), en un premier signal (O_{TV}) optique de longueur d'ondes λ₁, avec un second dispositif d'émission (2), qui convertit un second signal (S_{D}), dont le spectre se situe dans une seconde plage de fréquences (FB2), en un second signal (O_{D}) optique, et avec un dispositif de couplage (3), qui injecte les signaux (O_{TV}, O_{D}) optiques dans un réseau de fibres optiques (4, 5), auquel est raccordée au moins une terminaison réseau (6) optique,
**caractérisé en ce que**
des moyens (22, 23) pour le traitement du second signal (S_{D}) électrique sont présents dans le second dispositif d'émission (2), qui concentrent l'énergie du signal sur une plage partielle, différente de la première plage de fréquences (FB1), de la seconde plage de fréquences (FB2), et **en ce qu'**un convertisseur (21) électro-optique est présent dans le second dispositif d'émission (2), pour la conversion du second signal électrique et concentré en second signal optique (O_{D}) de longueur d'ondes λ₂, qui est différente de la longueur d'ondes λ₁, et **en ce que**, dans au moins une terminaison réseau (6) optique, on trouve un convertisseur (24) opto-électrique, qui convertit les signaux optiques reçus (O_{TV,} O_{D}) de longueurs d'ondes λ₁ et λ₂ en un signal multiplex électrique (E_{MUX}) , et des moyens de séparation et de traitement (25, 26, 27, 28) qui récupèrent les premier et second signaux électriques (S_{TV}, S_{D}) à partir du signal multiplex (E_{MUX}) électrique.

2. Système optique selon la revendication 1, **caractérisé en ce que** les moyens (22, 23) pour le traitement du second signal (S_{D}) électrique concentrent le spectre de façon que des fréquences, qui sont inférieures à une première fréquence limite (F_{G1}) limitant la plage partielle de la deuxième plage de fréquences (FB2), soient supprimées.

3. Système optique selon la revendication 2, **caractérisé en ce que** les moyens (22,23) pour le traitement du second signal (S_{D}) comprennent un dispositif de codage (23), qui code le second signal (S_{D}) électrique en fonction d'une spécification de codage, et un dispositif de filtrage (22) qui supprime des fréquences qui sont inférieures à la première fréquence limite (f_{G1}), et **en ce que** les moyens de séparation et de traitement (25, 26, 27, 28) comprennent un dispositif de division (25) réalisé comme diviseur de puissance, qui divise le signal multiplex (E_{MUX}) électrique en deux branches, un premier filtre (26) électrique présent dans la première branche, qui supprime des fréquences du signal multiplex (E_{MUX}) électrique, qui sont supérieures à une seconde fréquence limite (f_{G2}), un second filtre (27) électrique présent dans la seconde branche, qui supprime des fréquences du signal multiplex (E_{MUX}) électrique, qui sont inférieures à une troisième fréquence limite (f_{G3}), et un système régénérateur et de décodage (28), qui régénère et décode le signal obtenu par filtrage du signal multiplex (E_{MUX}) électrique et récupère à partir de là le second signal (S_{D}) électrique.

4. Système optique selon la revendication 3, **caractérisé en ce que** le filtre (22) électrique du second dispositif d'émission (2) est un filtre passe-haut, **en ce que** le premier filtre (26) électrique de la terminaison réseau (6) optique est un filtre passe-bas et **en ce que** le second filtre (27) électrique de la terminaison réseau (6) optique est un filtre passe-haut.

5. Système optique selon la revendication 2, **caractérisé en ce que** les moyens, (22, 23) pour le traitement du second signal (S_{D}) comprennent un dispositif de codage (23), qui code le second signal (S_{D}) électrique en fonction d'une spécification de codage, et un système de filtrage (22), qui supprime des fréquences qui sont inférieures à la première fréquence limite (f_{G4}), et **en ce que** les moyens de séparation et de traitement (25, 26, 27, 28) comprennent un circuit diviseur de fréquence électrique, qui divise le signal multiplex (E_{MUX}) électrique en deux branches, des fréquences du signal multiplex (E_{MUX}) électrique étant supprimées dans la première branche, lesquelles sont supérieures à une seconde fréquence limite (f_{G2}), et un système régénérateur et de codage (28) présents dans la seconde branche, des fréquences étant supprimées dans la seconde branche, lesquelles sont inférieures à une troisième fréquence limite (f_{G3}).

6. Système optique selon la revendication 1, 3 ou 5, **caractérisé en ce que** le premier dispositif d'émission (1) est approprié pour convertir le premier signal (S_{TV}) électrique, qui est un signal analogique, un signal analogique de télévision par câble ou un signal numérique, en premier signal optique, et **en ce que** le second dispositif d'émission (2) est approprié pour convertir le second signal (S_{D}) électrique, qui est un signal numérique ou un signal numérique multiplexé dans le temps constitué de signaux de télécommunication individuels par abonné, en second signal optique.

7. Système optique selon la revendication 1, **caractérisé en ce que** le système de couplage (3) est réalisé sous la forme d'un dispositif multiplex de longueurs d'ondes qui convient pour coupler le premier signal optique avec une longueur d'onde de 1550 nm et le second signal optique avec une longueur d'onde de 1532 nm.

8. Système optique selon la revendication 3 ou 5, **caractérisé en ce que** le réseau de fibres optiques (4, 5) est un réseau optique passif, et **en ce que** la première fréquence limite (f_{G1}) est d'environ 500 MHz, la seconde fréquence limite (f_{G2}) d'environ 350 MHz et la troisième fréquence limite (f_{G3}) d'environ 400 MHz.

9. Système optique selon la revendication 3 ou 5, **caractérisé en ce que** la spécification de codage est un codage de canal avec le code de Miller.

10. Procédé pour la transmission optique d'un second signal électrique (S_{D}) au moyen d'un réseau de fibres optiques (4, 5), par lequel un premier signal électrique (S_{TV}), dont le spectre se situe dans une première plage de fréquences (FB1), est transmis après une conversion électro-optique comme premier signal optique (O_{TV}) avec la longueur d'onde λ₁, **caractérisé en ce que** le second signal électrique (S_{D}), dont le spectre se situe dans une seconde plage de fréquences (FB2), est traité de telle sorte que son énergie est concentrée sur une zone partielle, différente de la première plage de fréquences (FB1), de la seconde plage de fréquences (FB2), **en ce que** le second signal électrique concentré est converti ensuite de façon électro-optique en un second signal optique (O_{D}) avec la longueur d'onde λ₂, qui est différente de la longueur d'onde λ₁, et **en ce que** le second signal optique (O_{D}) est transmis en même temps que le premier signal optique (O_{TV}) dans le multiplex de longueurs d'ondes par le réseau de fibres optiques (4, 5), les longueurs d'onde λ₁ et λ₂ étant choisies de telle sorte que le signal multiplexant la longueur d'onde peut être converti au moyen d'un convertisseur optoélectronique (24) en un signal multiplex électrique.

11. Procédé selon la revendication 10, **caractérisé en ce que** le signal électrique est un signal numérique multiplexé dans le temps constitué de signaux individuels pour chaque abonné, qui est d'abord codé par canal pour la concentration de l'énergie et est filtré ensuite au moyen d'un filtre passe-haut.
